Europäisches Patentamt

(19) European Patent Office

Office européen des brevets

(11) Veröffentlichungsnummer : **0 021 226**
**B1**

(12) **EUROPÄISCHE PATENTSCHRIFT**

(45) Veröffentlichungstag der Patentschrift :
**13.07.83**

(21) Anmeldenummer : **80103211.1**

(22) Anmeldetag : **10.06.80**

(51) Int. Cl.³ : **B 62 D 27/00, E 04 D 13/15,
B 65 D 6/28**

(54) **Dachrahmen,. insbesondere für Fahrzeugaufbauten.**

(30) Priorität : **11.06.79 AT 4167/79**

(43) Veröffentlichungstag der Anmeldung :
**07.01.81 Patentblatt 81/01**

(45) Bekanntmachung des Hinweises auf die Patenterteilung : **13.07.83 Patentblatt 83/28**

(84) Benannte Vertragsstaaten :
**BE CH DE LI NL**

(56) Entgegenhaltungen :
**DE A 2 256 098
DE A 2 829 342
DE B 1 269 906
DE B 2 028 965
DE B 2 043 467
DE U 7 015 667
GB A 771 176
US A 3 205 001**

(73) Patentinhaber : **Vereinigte Metallwerke Ransho-
fen-Berndorf AG
Wohllebengasse 9
A-1041 Wien IV (AT)**

(72) Erfinder : **Högl, Johann
Schubertstrasse 13
D-5280 Braunau am Inn Oberösterreich (AT)**

(74) Vertreter : **Hain, Leonhard, Dipl.-Ing.
Tal 18/IV
D-8000 München 2 (DE)**

## Dachrahmen, insbesondere für Fahrzeugaufbauten

### Beschreibung

Die Erfindung betrifft einen Dachrahmen, insbesondere für Fahrzeugaufbauten, mit einem profilierten Grundrahmen zum Befestigen von Verkleidungsblechen, wie Dachbleche, und einer eine Eckenabdeckung bildende Klemmleiste, die die Verkleidungsbleche mit dem Grundrahmen lösbar verklemmt.

Bei einem Dachrahmen dieser Art (DE-B-12 69 906) ist die Klemmleiste von einer gekrümmten Platte gebildet, an deren Verbindungsränder vorspringende Leisten angeformt sind, die mit den angrenzenden Grundrahmenprofilen stellenweise verschraubt sind und das Dachblech bzw. das Verkleidungsblech unter Abkanten einklemmen. Hierdurch läßt sich zwar eine sichere Befestigung des Dachbleches bzw. der Wandbleche sowie auch der Klemmleiste selbst erreichen, jedoch erfordert die Montage der Klemmleiste jeweils das Ein- bzw. Herausschrauben einer Vielzahl von Schrauben. Die von außen sichtbaren Schrauben bilden zudem Ansatzstellen für Lack- und Rostschäden. Der zwischen Grundrahmen und Klemmleiste geschaffene Preßsitz für die Verkleidungsbleche ermöglicht keine Anpassung der Bleche an unter dem Einfluß von Temperaturschwankungen auftretenden Dehnungserscheinungen, so daß sich Verwerfungen in den Blechbahnen nicht verhindern lassen. Zum Befestigen von Fahrzeug-Verkleidungsblechen an einem Steherprofil sind schon einschnappbare Klemmleisten mit zwei parallelen Schenkeln mit hinterhakenden Nasen für eine selbsthemmende Verbindung bekanntgeworden (DE-A-28 29 342). Diese Wandbefestigung setzt jedoch ein U-förmiges Steherprofil als Grundrahmen voraus. Die Verkleidungsblechenden werden außerdem unter abgewinkelter Verformung eingepreßt. Zu einer Eckenabdeckung an einem Fahrzeugaufbau läßt sich diese Klemmleiste nicht verwenden. Bei einer Ortgangverkleidung für Flachdächer (DE-B-2-20 43 467) ist es schon bekannt, einen Halter eines Verkleidungsprofiles unmittelbar an einem Dachrand-Anschlußprofil durch zwei parallele Schenkel mit hinterhakenden Nasen selbsthemmend zu befestigen. Auch diese Dachkonstruktion läßt sich nicht auf Fahrzeugaufbauten übertragen.

Der Erfindung liegt daher die Aufgabe zugrunde, einen Dachrahmen zu schaffen, mit dem die Verkleidungsbleche auf einfachere Art und ohne Randverformung befestigt werden können.

Zur Lösung dieser Aufgabe ist ein Dachrahmen der eingangs genannten Art gemäß der Erfindung dadurch gekennzeichnet, daß zum Befestigen der Dachbleche der Grundrahmen einen nach oben abstehenden Vertikalsteg mit einer horizontalen Auflageplatte für das Dachblech sowie einen nach außen abstehenden Horizontalsteg mit einer Einrastleiste an seinem Ende aufweist, daß die Klemmleiste mit ihrem Schenkelfortsatz die Auflageplatte überdeckt und dazu mittels paralleler zum Grundrahmen gerichteter Schenkel mit hinterhakenden Nasen selbsthemmend mit Gegennasen des Vertikalsteges und eines Hilfssteges sowie ferner mittels einer Aufsteckleiste mit der Einrastleiste in Eingriff steht.

Weitere Merkmale der Erfindung sind den Unteransprüchen zu entnehmen.

Der erfindungsgemäße Dachrahmen mit entsprechend ausgebildetem Grundrahmen ermöglicht eine sichere Halterung des Dachbleches ohne jegliche Verformung des eingeklemmten Randes. Daher kann sich das Dachblech unter dem Einfluß von Temperaturschwankungen ausdehnen oder zusammenziehen. Die Klemmleiste läßt sich in einfacher Weise durch bloßes Aufdrücken in Stellung bringen und ebenso wieder aus der Klemmstellung lösen, wenn eines der Verkleidungsbleche erneuert werden soll. Die hinterhakenden Schenkel in Verbindung mit der in Horizontalrichtung wirkenden Einrastung gewährleisten einen sicheren Sitz der Klemmleiste. Eine besonders vorteilhafte Befestigung eines Seitenwandbleches ergibt sich, wenn die Klemmleiste eine ausschwenkbare Abdeckleiste aufweist.

Die Erfindung wird nachfolgend anhand von Ausführungsbeispielen, die auch in der Zeichnung dargestellt sind, näher beschrieben. Es zeigen :

Figur 1 einen Schnitt durch einen ersten Dachrahmen und

Figur 2 einen Schnitt durch einen zweiten Dachrahmen.

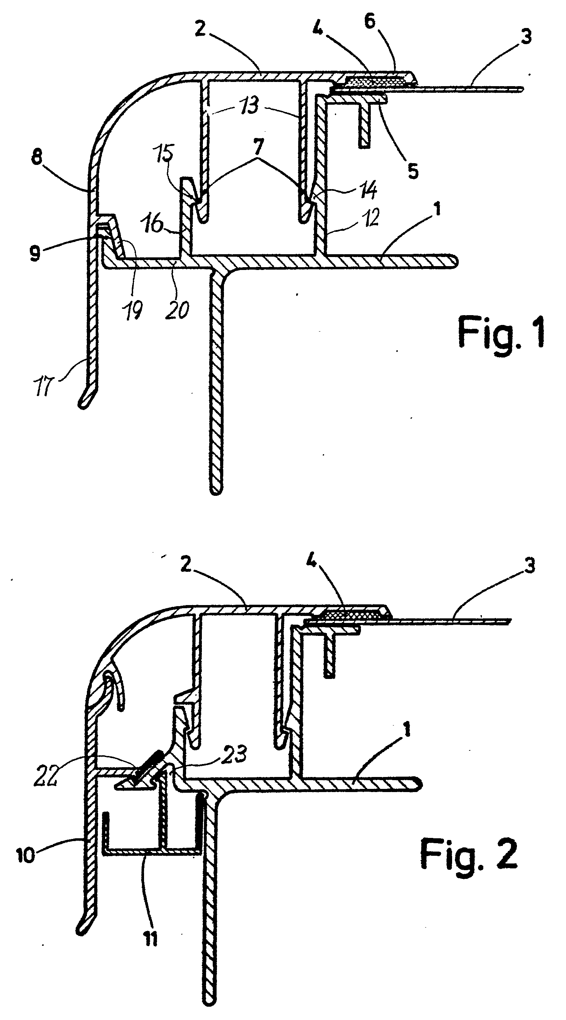

Durch eine zweigeteilte Ausführung kann ein Dachblech 3 zwischen einer Auflageplatte 5 eines nach oben abstehenden Vertikalsteges 12 eines Grundrahmens 1 und einem Schenkelfortsatz 6 einer Klemmleiste 2 über ein Dichtungsband 4 fixiert werden. Die Klemmleiste bildet eine Eckenabdeckung eines Fahrzeugaufbaues und ihre Halterung erfolgt gemäß Fig. 1 über an parallelen zum Grundrahmen gerichteten Schenkeln 13 vorgesehenen hinterhakenden Nasen 7, die selbsthemmend in Gegennasen 14 bzw. 15 am Vertikalsteg 12 sowie an einem Hilfssteg 16 eingreifen. Eine Klemmleistenrundung 8, die für einen Seitenwandanschluß einen Verlängerungsschenkel 17 aufweist, ist mittels einer Aufsteckleiste 19, die eine Einrastleiste 9 an einem sich nach außen erstreckenden Horizontalsteg 20 übergreift, ebenfalls mit dem Grundrahmen verbunden.

Fig. 2 zeigt eine weitere Variante eines nietfreien Daches, wobei diese nicht nur eine Klemmverbindung zum Dachblech aufweist, sondern auch die oft geforderte Bedingung erfüllt, daß die Seitenwand ohne Probleme, z. B. zu Reparaturzwecken, entnommen werden kann. Unter dieser Voraussetzung ist ein dreigeteilter Dachrahmen vorgesehen, der einmal das Dachblech mittels der Klemmleiste 2, wie in Fig. 1 dargestellt, einklemmt und die Seitenwand über eine an der Klemmleiste ausschwenkbar gelagerte Abdeckleiste 10 fixiert. Die Abdeckung des Dachbleches erfolgt über das komprimierbare Band 4, welches in die Klemmleiste eingeklebt wird und beim Einschnappen in den Grundrahmen 1 automatisch abdichtet. Die Abdeckleiste 10 ist mittels einer Einschnapprastung 22 am Ende des entsprechend angepaßten Horizontalsteges des Grundrahmens befestigt.

Ist die Seitenwand (nicht dargestellt) aus einem Blechelement zusammengestellt, so kann in den Grundrahmen 1 eine Anschlagschiene 11 fix eingeschnappt werden, die zur Klemmung des Blechelementes mit der ausschwenkbaren Abdeckleiste dient. Zur Halterung dieser Anschlagleiste 11 ist der Horizontalschenkel 20 zur Bildung einer Einrastnut 23 gekröpft.

Die Verbindung der Dachbleche untereinander erfolgt über Dachquerriegel (nicht gezeichnet), die ebenfalls mit Schnappleisten versehen sind, welche die Dachelemente fixieren.

Die Erfindung ist nicht auf Fahrzeugaufbauten beschränkt, sondern kann auch bei stationären Konstruktionen von Verschalungen, Bauhütten und Behältern (Schachteln) angewendet werden.

## Ansprüche

1. Dachrahmen, insbesondere für Fahrzeugaufbauten, mit einem profilierten Grundrahmen (1) zum Befestigen von äußeren Verkleidungsblechen (3), wie Dachblechen, und einer eine Eckenabdeckung bildende Klemmleiste (2), die die Verkleidungsbleche mit dem Grundrahmen lösbar verklemmt, dadurch gekennzeichnet, daß zum Befestigen der Dachbleche (3) der Grundrahmen (1) einen nach oben abstehenden Vertikalsteg (12) mit einer horizontalen Auflageplatte (5) für das Dachblech (3) sowie einen nach außen abstehenden Horizontalsteg (20) mit einer Einrastleiste (9) an seinem Ende aufweist, daß die Klemmleiste (2) mit ihrem Schenkelfortsatz (6) die Auflageplatte (5) überdeckt und dazu mittels paralleler zum Grundrahmen gerichteter Schenkel (13) mit hinterhakenden Nasen (7) selbsthemmend mit Gegennasen (14 bzw. 15) des Vertikalsteges (12) und eines Hilfssteges (16) sowie ferner mittels einer Aufsteckleiste (19) bzw. Einschnapprastung (22) mit der Einrastleiste (9) in Eingriff steht.

2. Dachrahmen nach Anspruch 1, dadurch gekennzeichnet, daß zum Anschluß von Seitenwandblechen der den Grundrahmen seitlich abdeckende Klemmleisten-Schenkel (17) von einer an der Klemmleiste ausschwenkbar gelagerten Abdeckleiste (10) gebildet ist, die mittels einer Einschnapprastung (22) am Grundrahmen-Horizontalsteg (20) gehalten ist.

3. Dachrahmen nach Anspruch 2, dadurch gekennzeichnet, daß zur Klemmung von Seitenwandblechen zwischen Grundrahmen (1) und der Klemmleiste bzw. deren Abdeckleiste (10) eine mit dem Grundrahmen in Schnappverbindung stehende Anschlagschiene (11) vorgesehen ist.

4. Dachrahmen nach einem der Ansprüche 1 bis 3, dadurch gekennzeichnet, daß zum Abdichten des Dachbleches (3) ein komprimierbares Dichtungsband (4) in den das Dachblech (3) überlappenden Klemmleisten-Schenkel (6) eingeklebt ist.

## Claims

1. Roof edge, especially for vehicle bodies, comprising a profiled basic frame (1) for mounting outer covering sheets (3), such as roof sheets, and a locking strip (2) forming a corner covering, the locking strip clamping the covering sheets to the basic frame detachably, characterized in that for mounting the roof sheets (3) the basic frame (1) has a vertical arm (12) standing upwardly with a horizontal supporting plate (5) for the roof sheet (3) as well as a horizontal flange (20) standing outwardly with an engaging border (9) at its end, the locking strip (2) overlaps the supporting plate (5) by means of its leg protrusion (6) and for that purpose is engaged in self-locking manner in counter hooks (14 ; 15) of the vertical arm (12) and an auxiliary arm (16) by means of legs (13) arranged in parallel direction to the basic frame and being provided with hooking noses (7) and furthermore in the engaging border (9) by means of an insert border (19) or catching notch (22).

2. Roof edge according to claim 1, characterized in that for mounting side wall sheets the flange (17) of the locking strip covering the basic frame on the side is formed by a covering ledge (10) rotatably disposed on the locking strip, the covering ledge being held to the horizontal flange (20) of the basic frame by means of a catching notch (22).

3. Roof edge according to claim 2, characterized in that an end rail (11) connected with the basic frame in snap-action is provided for clamping of side wall sheets between basic frame (1) and the locking strip (2) or its covering ledge (10).

4. Roof edge according to one of the claims 1 to 3, characterized in that for sealing the roof sheet (3) a compressible sealing band (4) is pasted into the leg protrusion (6) of the locking strip overlapping the roof sheet (3).

## Revendications

1. Cadre de toiture, en particulier pour superstructures d'aéronefs, comportant un cadre de base profilé (1) pour la fixation de tôles externes d'habillage (3) telles que des tôles de toiture, ainsi qu'un jonc de coincement (2) qui, formant un recouvrement d'angle, solidarise amoviblement par coincement les tôles d'habillage et le cadre de base, cadre caractérisé par le fait que, en vue de la fixation des tôles de toiture (3), le cadre de base (1) comprend une âme verticale (12) saillant vers le haut et présentant une plaque horizontale (5) de soutien de la tôle de toiture (3), ainsi qu'une âme horizontale (20) en saillie vers l'extérieur et dotée à son extrémité d'une patte emboîtable (9) ; et par le fait que le jonc de coincement (2) recouvre la plaque de soutien (5) par sa branche de prolongement (6) et est en prise à cet effet au moyen de branches parallèles (13) orientées vers le cadre de base et pourvues de becs encliquetables (7) se bloquant automatiquement dans des becs encliquetables complémentaires (14 ; 15) de l'âme verticale (12) et d'une âme auxiliaire (16), et est en outre en prise avec la patte emboîtable au moyen d'une gouttière d'emboîtement (19) ou d'un ergot à déclic (22).

2. Cadre de toiture selon la revendication 1, caractérisé par le fait que, en vue du raccordement de tôles de parois latérales, la branche (17) du jonc de coincement recouvrant latéralement le cadre de base est formée par un jonc de recouvrement (10) qui, monté à pivotement sur le jonc de coincement, est maintenu en place sur l'âme horizontale (20) du cadre de base au moyen d'un ergot à déclic (22).

3. Cadre de toiture selon la revendication 2, caractérisé par le fait que, en vue du coincement de tôles de parois latérales entre le cadre de base (1) et le jonc de coincement ou le jonc de recouvrement (10) de ce dernier, il est prévu un rail de butée (11) en liaison par encliquetage avec le cadre de base.

4. Cadre de toiture selon l'une des revendications 1 à 3, caractérisé par le fait que, pour assurer l'étanchement de la tôle de toiture (3), une bande compressible d'étanchéïté (4) est collée dans la branche (6) du jonc de coincement qui chevauche la tôle de toiture (3).

0 021 226

Fig. 1

Fig. 2